# EUROPEAN PATENT APPLICATION

(11) **EP 1 802 002 A2**
(43) Date of publication of application: **27.06.2007**
(21) Application number: 06077182.1
(22) Date of filing: 06.12.2006
(51) Int. Cl.: H04B 7/185

(54) **Method and system for injecting sub-synchronization signals**

(30) Priority: 22.12.2005 US 315655
(71) Applicant: Delphi Technologies, Inc., Troy, Michigan 48007 (US)
(72) Inventor: Dibiasco, Eric A., Kokomo, IN 46901 (US); Walker, Glenn A., Greentown, IN 46936 (US)
(74) Representative: Denton, Michael John

(57) **Abstract**

A system and method of communicating sub-synchronization information into a transmitted digital audio stream and extracting sub-synchronization information from a received digital audio stream is provided. The method includes the steps of having a transmitter (50) introduce sub-synchronization information (S) into a data stream at a period less than that of existing pre-amble signals (FSPs), and transmitting that data to a receiver (40). The method further includes the steps of receiving the transmitted data stream in the receiver (40), extracting the synchronization information (S), and using the synchronization information (S) to accurately decode the received audio data.

## Description

### Technical Field

The present invention generally relates to wireless digital communications, and more particularly, to injecting synchronization information into wirelessly transmitted signals received and decoded by digital satellite transceiver systems in a format and at a rate sufficient to permit the effective use of fast diversity switching antenna systems.

### Background of the Invention

Trucks, boats, automobiles, and other vehicles are commonly equipped with various signal communication devices such as radios for receiving broadcast radio frequency (RF) signals, processing the RF signals, and broadcasting audio information to passengers. Satellite digital audio radio (SDAR) services have become increasingly popular, offering digital radio service covering large geographic areas, such as North America. These services receive uplinked programming which, in turn, is rebroadcast directly to digital radios that subscribe to the service. Each subscriber to the service generally possesses a digital radio having a receiver and one or more antennas for receiving the digital broadcast.

In satellite digital audio radio services systems, the radio receivers are generally programmed to receive and decode the digital data signals, which typically include many channels of digital audio. In addition to broadcasting the encoded digital quality audio signals, the satellite service may also transmit data that may be used for various other applications. The broadcast signals may include advertising, information about warranty issues, information about the broadcast audio programs, and news, sports, and entertainment programming. Thus, the digital broadcasts may be employed for any of a number of satellite audio radio, satellite television, satellite Internet, and various other consumer services.

In vehicles equipped for receiving satellite-based services, each vehicle generally includes one or more antennas for receiving the satellite digital broadcast. One example of an antenna arrangement includes one or more antennas mounted in the sideview mirror housing(s) of an automobile. Another antenna arrangement includes a thin phase network antenna having a plurality of antenna elements mounted on the roof of the automobile. The antennas(s) may be mounted at other locations, depending on factors such as vehicle type, size, and configuration.

As the antenna profiles for the satellite-based receiving systems become smaller, performance of the antenna may be reduced. To regain this lost performance, multiple small directional antennas may be used that compliment each other. This type of antenna system relies on switching to the best antenna source for the signal reception. Another option is to combine the antenna with beam steering electronics. For low cost applications, a switched diversity antenna may be employed. In doing so, the RF receiver typically controls which antenna to use by detecting the presence of a desired signal.

Systems employing more than one antenna generally switch to another antenna when the signal from the current antenna is lost, or when the system determines that another antenna has a stronger signal. In a moving vehicle with frequently changing antenna orientations, it is often desirable to switch frequently and quickly among the various system antennas. When the system switches from one antenna to another, the system must acquire the new signal and process it to extract the audio or other data that is being transmitted. However, switching randomly causes the digital demodulator to quickly detect a new signal with an unknown phase. While the phase detector circuitry of many digital receiver demodulators will track the phase to a given position, the resulting data orientation generally will be unknown. Because of the unknown data orientation, it is not possible to correctly interpret the transmitted data.

The unknown phase/orientation problem discussed above can be resolved by transmitting a known data sequence into the data stream at predetermined times. This data sequence is known as a pre-amble or synchronization signal. By first decoding the synchronization or preamble bits sent as part of the transmitted signal, the receiver can know how to accurately decode the audio or other data that has been transmitted, and can reproduce that data for the user. However, the decoding of the synchronization bits must occur quickly in order to avoid a delay in the decoding of the audio or other transmitted data. This is because a delay in the data decoding may result in a loss of data, which in turn can result in audio mute for radio applications. To avoid this condition, synchronization data generally needs to be transmitted and received/decoded as soon as possible after a switch has been made to a new antenna.

Although some current satellite transmission/reception schemes do provide for periodic transmission of synchronization bits to allow a receiver to ultimately decode transmitted data, the frequency of transmission of these synchronization bits is often too slow to allow for use in fast diversity switching antenna systems where rapid switching among antennas is required in order for the system to be effective. It is therefore desirable to provide for a transmission and reception system that provides for enhanced transmission and reception of synchronization information.

### Summary of the Invention

For purposes of this invention, the term "sub-synchronization" means having a time period less than an existing synchronization or pre-amble information (including signals and/or data). The terms "period" and "time period" refer to the amount of time between synchronization information.

In accordance with one aspect of the present invention, a method of communicating sub-synchronization information into a transmitted digital stream at a period of less than existing pre-amble information already associated with that stream, and extracting sub-synchronization signals from a received digital signal stream, is provided. The method includes the steps of generating a data stream including pre-amble signals having a first period, introducing sub-synchronization information into a data stream at a period of less than that of the existing pre-amble signals, and transmitting that data stream to a receiver. The method also includes the steps of receiving the transmitted data stream in the receiver, extracting the sub-synchronization information, and using the sub-synchronization information to accurately decode the received data.

According to another aspect of the present invention, a system utilizing sub-synchronization signals to accurately transmit and receive data is provided. The system includes a communication system transmitter that transmits a signal having pre-amble signals with a first period. The transmitter generates sub-synchronization signals with a second period of less than that of the first period of the pre-amble signals, and incorporates the sub-synchronization signals into a composite signal that is transmitted. The system also includes a communication system receiver that receives the composite signal that includes sub-synchronization signals, and that extracts the sub-synchronization signals and uses them to accurately decode data.

In accordance with a further aspect of the present invention, a receiver capable of receiving sub-synchronization signals to accurately receive and decode transmitted data is provided. The system includes a communication signal receiver containing a sub-synchronization correlator for extracting synchronization information from a sub-synchronization signal. The system receives a signal having a pre-amble signal with a first period and sub-synchronization signals with a period of less than that of the first period, extracts synchronization information from the sub-synchronization signal, and uses the synchronization information to accurately interpret data contained in the received signal.

These and other features, advantages and objects of the present invention will be further understood and appreciated by those skilled in the art by reference to the following specification, claims and appended drawings.

### Brief Description of the Drawings

The present invention will now be described, by way of example, with reference to the accompanying drawings, in which:
Fig. 1 is a general schematic diagram illustrating a digital communications system employed on a vehicle equipped with multiple antennas for receiving satellite broadcast services;
Fig. 2 is a block diagram illustrating a satellite signal transmitter for processing, encoding, and transmitting signals to satellite receivers, according to one embodiment of the present invention;
Fig. 2A is a timing diagram generally illustrating signals associated with one embodiment of the present invention;
Fig. 3 is a block diagram illustrating a satellite receiver system for receiving and processing satellite signals from multiple antennas, according to one embodiment of the present invention;
Fig. 4 is a block diagram illustrating a satellite transmitter system for processing, encoding, and transmitting signals to satellite receivers, according to another embodiment of the present invention;
Fig. 4A is a timing diagram generally illustrating signals associated with another embodiment of the present invention;
Fig. 5 is a flow diagram illustrating a sub-synchronization injection routine for injecting sub-synchronization signals into a signal stream, according to one embodiment of the present invention;
Fig. 6 is flow diagram illustrating a sub-synchronization recovery routine for extracting and utilizing sub-synchronization signals from a signal stream, according to one embodiment of the present invention; and,
Fig. 7 is a flow diagram illustrating a sub-synchronization signal injection and recovery routine for injecting signals into, and extracting sub-synchronization signals from, a signal stream, according to another embodiment of the present invention.

### Description of the Preferred Embodiments

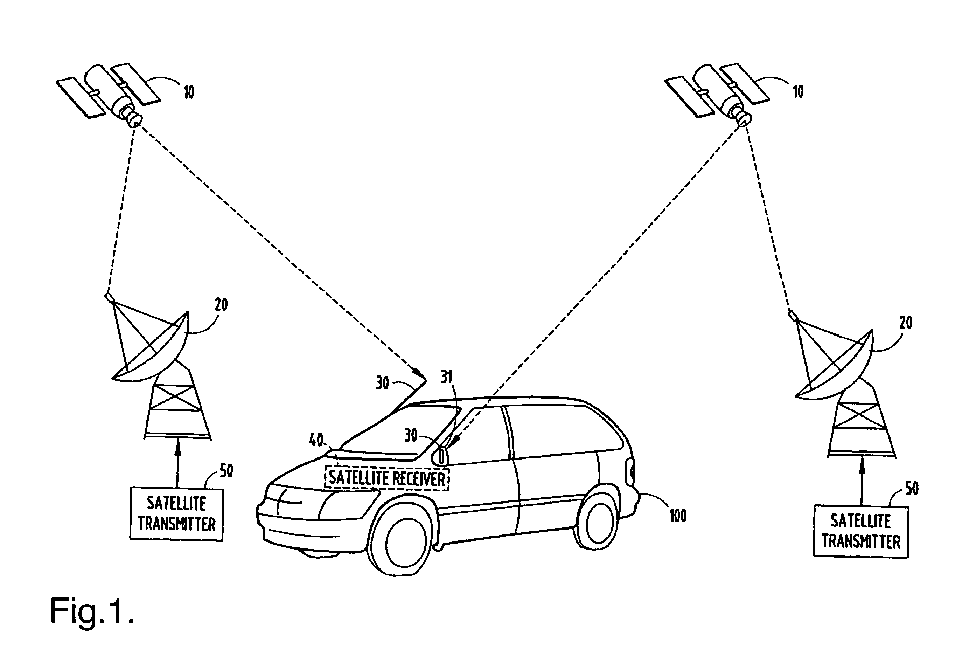

Referring to Fig. 1, a satellite digital audio system is generally illustrated employed on a vehicle 100 having a satellite-based digital audio radio receiver 40, according to one embodiment of the present invention. The satellite digital audio radio service may be used to provide any of a number of consumer services, including radio, television, Internet, and other data broadcast services. The digital radio service system shown includes first and second satellites 10 broadcasting streams of data from satellite transmitter 50 that have been transmitted to satellites 10 via satellite dishes 20. Any number of satellites 10 and satellite transmitters 50 and/or terrestrial transmitters may be employed by the digital audio radio system to broadcast digital signals.

Vehicle 100 is equipped with satellite receiver 40, including signal receivers, in the form of first and second antennas 30, for receiving radio frequency (RF) signals broadcast by any of satellites 10. One of the antennas 30 is shown mounted one on the roof of the vehicle 100, and another antenna 30 is shown on or in sideview mirror 31 of the vehicle 100. The antennas 30 could also be mounted on the tops of each of the two sideview mirrors. It should be appreciated that any of a number of antennas and antenna arrangements may be employed on various locations of the vehicle 100, for receiving and/or transmitting signals to communicate with remote satellites and/or terrestrial-based communication devices.

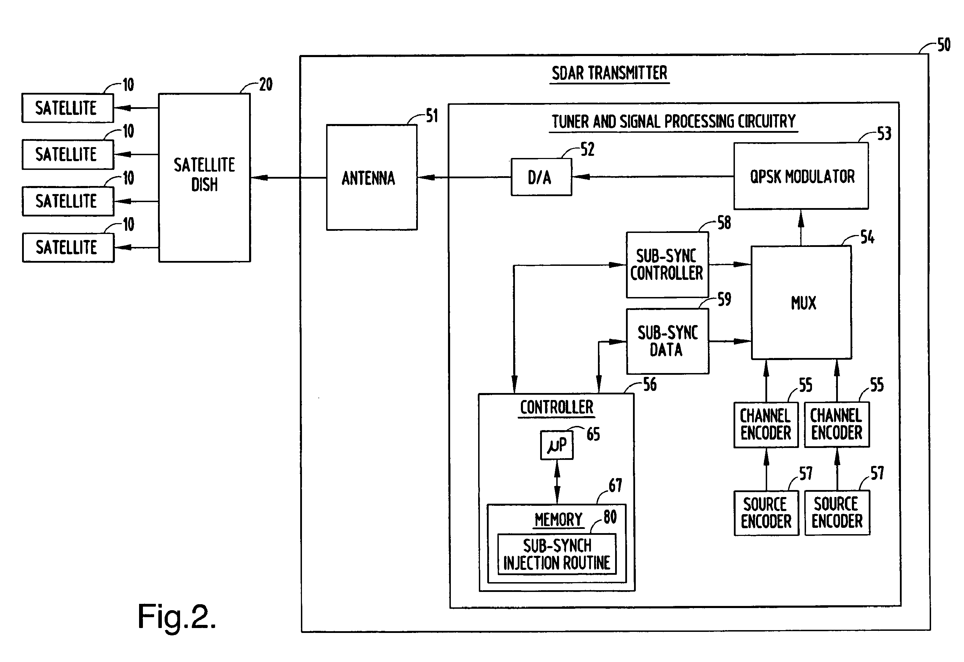

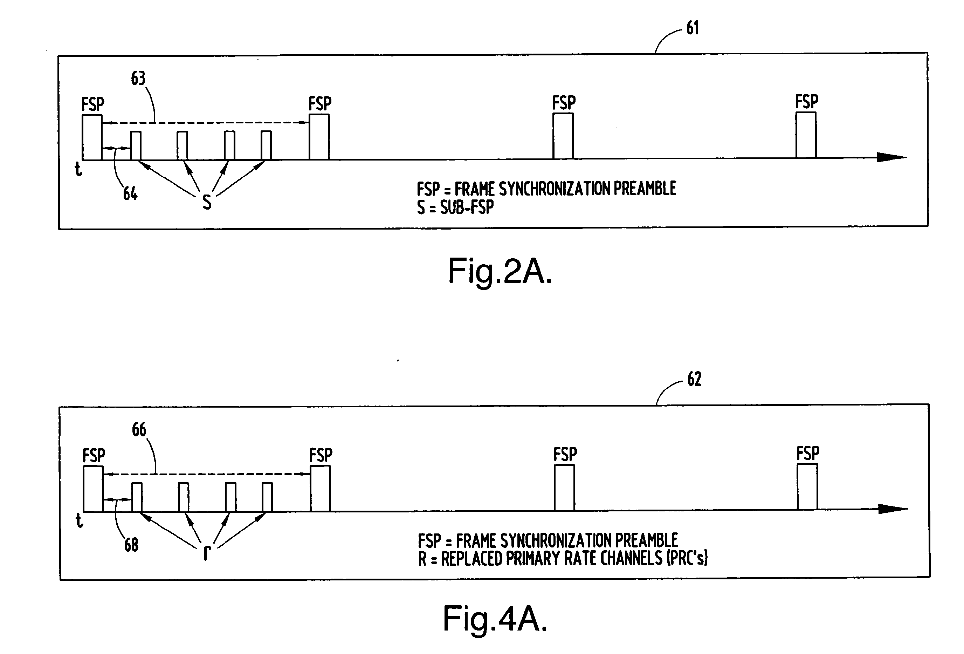

The satellite transmitter 50 is illustrated in Fig. 2, according to one embodiment of the present invention. The satellite transmitter 50 includes source encoders 57 for encoding the source audio signal, channel encoders 55 for further encoding the source signal prior to transmission, and a multiplexer (MUX) 54 for time division multiplexing the signals to be transmitted. Satellite transmitter 50 is further shown including sub-synchronization data 59 and a sub-synchronization controller 58 connected to MUX 54 to provide synchronization data and signals in conjunction with channel and source encoded data 55 and 57 for injection into the transmitted signal. Transmitter 50 further includes a QPSK modulator 53 for modulating the signals provided by MUX 54, a digital-to-analog converter 52 for converting the digital signals to analog form, and an antenna 51 for transmitting the signal to satellite antenna dish 20 for further transmission to one or more satellites 10. Digital signal transmitter 50 may also include a root raised cosine filter for filtering the signal from QPSK modulator 53 before it is processed by digital-to-analog converter 52, and upmixer circuitry between digital-to-analog converter 52 and antenna 51. Digital signal transmitter 50 may further include controller 56, equipped with microprocessor 65 and memory 67, to assist in the processing of the signals to be transmitted.

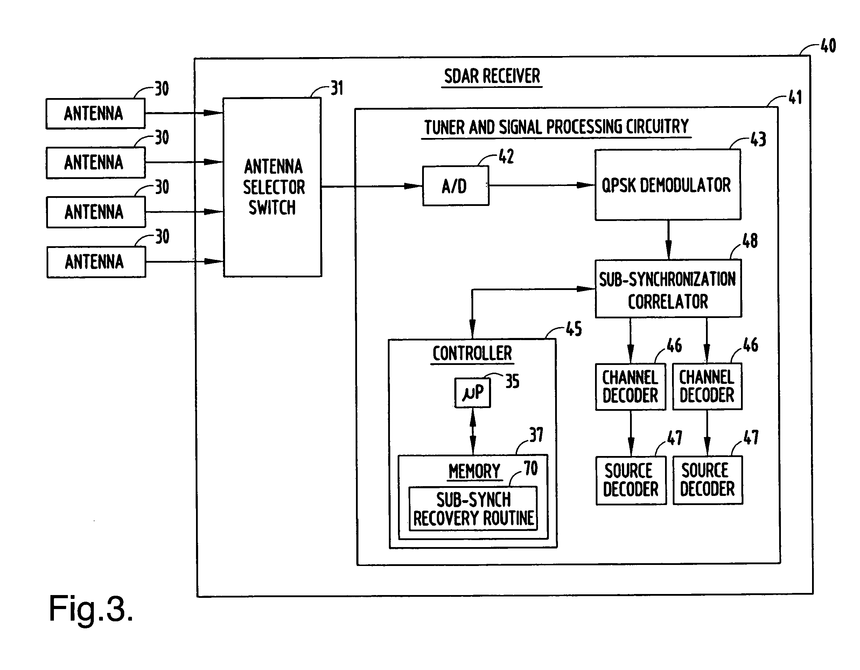

The digital satellite receiver 40 employed on vehicle 100 is shown in Fig. 3, according to a first embodiment of the present invention. The receiver 40 has inputs for receiving RF signals containing streams of broadcast data received from each of the antennas 30. The input signals received by N number of antennas 30 may be satellite or terrestrial-based broadcast signals. The digital satellite receiver 40 is configured to receive signals from the antennas 30, selectively switch between the antenna signals, and further process signals from the selected antenna. The receiver 40 includes an antenna select switch 31, for selecting which of the output signals from antennas 30 to select for processing. Additionally, the receiver 40 includes tuner and signal processing circuitry 41, for receiving selected signals from one of antennas 30, selecting a frequency bandwidth of a digital, audio, and/or other data to pass RF signals within a tuned frequency bandwidth, and for processing tuned frequency signals, including demodulating and decoding the signals to extract digital data from the received selected and tuned signals.

The receiver 40 is further shown including an analog-to-digital converter 42, a QPSK demodulator 43, a sub-synchronization correlator 48 for extracting sub-synchronization data, channel decoders 46, source decoders 47, and a controller 45 having a microprocessor 35 and memory 37. The microprocessor 35 may include a conventional microprocessor having the capability for processing routines and data, as described herein. The memory 37 may include read-only memory ROM, random access memory RAM, flash memory, and other commercially available volatile and non-volatile memory devices. Stored within the memory 37 of controller 45 are data and routines for selecting and processing received data. As is shown in Fig. 3, the memory 37 of controller 45 may optionally include a sub-synchronization recovery routine 70, that is executed by the microprocessor. Controller 45 may alternately be in the form of alternative digital and/or analog circuitry.

The operation of the satellite digital audio system is now discussed according to one embodiment of the present invention. As shown in Fig. 2, source audio signals generated by devices external to digital signal transmitter 50 are supplied to the source encoders 57 of the digital signal transmitter 50. Those signals are further encoded by channel encoders 55, the outputs of which are input to MUX 54. In conjunction with these signals, sub-synchronization data 59 and control signals from sub-synchronization controller 54 are also provided to MUX 54. Using data provided by sub-synchronization controller 58, the sub-synchronization data is combined by MUX 54 with the source and channel encoded data to provide output signals including a sub-synchronization signal to QPSK modulator 53 to be modulated. The signals sent to QPSK modulator 53 include both a pre-amble signal having a first period, and a sub-synchronization signals with a period less than that of the first period of the pre-amble signal. The output signals are then sent from QPSK modulator 53 to digital-to-analog converter 52 for conversion into an analog format for transmission. The analog signals are then passed from digital-to-analog converter 52 to antenna 51, at which point they leave the digital signal transmitter and are passed on to satellite dish 20 for transmission to one or more satellites 10. Controller 56, which in the illustrated embodiment includes microprocessor 65 and memory 67, along with a sub-synchronization injection routine 80, may be used to assist in the generation of sub-synchronization signals, and their incorporation into the final transmitted signals.

A timing diagram 61, shown in Fig. 2A, illustrates the output signals from digital satellite transmitter 50 including sub-synchronization signals in the form of sub-frame synchronization protocol (sub-FSP) signals S that have been injected into the transmitted signal. As shown, the sub-synchronization signals (sub-FSPs) have a period 64 that is less than the period 63 of frame synchronization preambles (FSPs) generally transmitted by the digital satellite transmitters and used by the receivers to determine the correct phase and polarity of received signals. In one embodiment, the transmitter uses FSPs with a period of approximately 2 milliseconds. In this case, the sub-synchronization signals are injected with a period of less than 2 milliseconds (for example, between 250 and 500 microseconds). It should be noted that satellite transmitter 50 may optionally transmit standard FSP signals having a greater or lesser time period than 2 milliseconds. As noted above, the period 64 of the sub-synchronization signals will be selected to be less than the period 63 of the standard FSP signal of the transmitter 50.

After being transmitted via satellite dish 20 and one or more satellites 10, the transmitted signals are received by digital satellite receiver 40. Antennas 30, connected to the digital satellite receiver shown in Fig. 3, receive the signals transmitted by the digital satellite transmitter in Fig. 2. Antenna selector switch 31 of digital satellite receiver 40 selects from among the antenna signals 30 and passes one signal on to the tuner and signal processing circuitry 41. The passed signal is converted to digital form by analog-to-digital converter 42 and then passed on to QPSK demodulator 43. The signals are then passed from QPSK demodulator 43 to sub-synchronization correlator 48. Sub-synchronization correlator 48 extracts the sub-synchronization data transmitted by transmitter 50 and uses the sub-synchronization data to correct for any phase or polarity ambiguity in the received data. With the ambiguities removed, the signals are de-multiplexed and provided to channel decoders 46 and source decoders 47, at which point they may be played back by the vehicle or other audio system. During decoding and processing of the received signal, controller 45, which in the illustrated embodiment includes a microprocessor 35 and memory 37, along with a sub-synchronization recovery routine 70, may be used to assist in the processing.

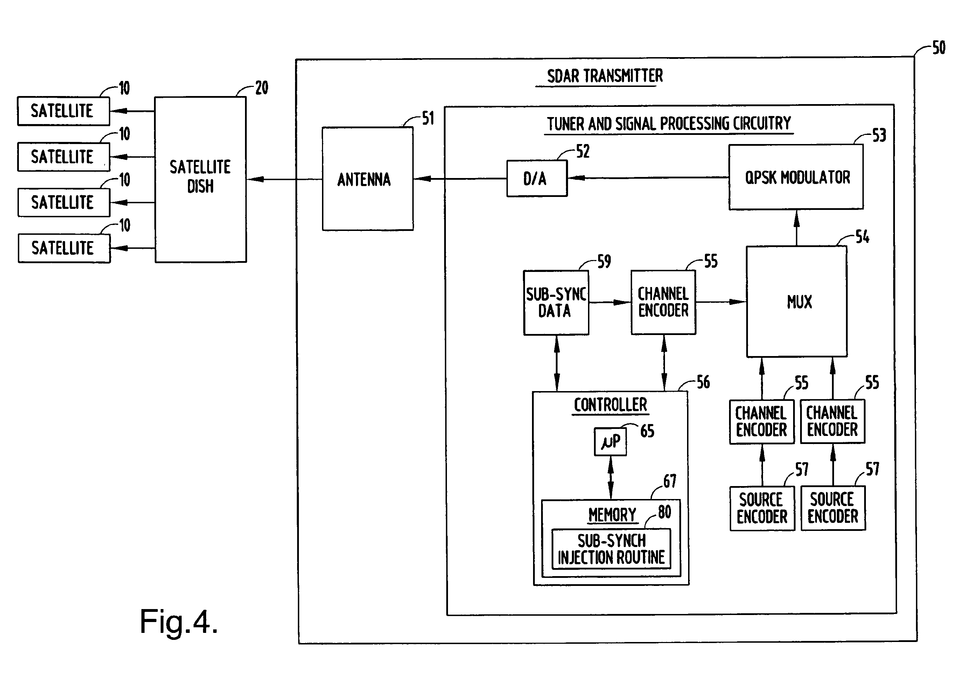

In another embodiment, similar to the embodiment shown in Fig. 2, digital satellite transmitter 50 employs an alternate configuration, as shown in Fig. 4. In this embodiment, sub-synchronization data 59 is provided to a channel encoder 55, which then provides the sub-synchronization data to MUX 54. The source audio signals are provided to source encoder 57 of digital satellite transmitter 50. These signals are then encoded by channel encoder 55 and provided to MUX 54. In conjunction with these signals, sub-synchronization data 59 is provided to channel encoder 55 and then passed on to MUX 54. As in previous embodiments, the sub-synchronization data and the encoded source data are combined via MUX 54 into the signals provided to QPSK modulator 53. The modulated output signal from QPSK modulator 53 includes both a pre-amble signal having a first period, and sub-synchronization signals having a period less than that of the first period of the pre-amble signals. These signals are then passed on to digital-to-analog converter 52, where they are converted into analog signals. The analog signals are then passed on to antenna 51, where they leave the updated digital satellite transmitter and are passed on to satellite dishes 20 and one or more satellites 10. As in the previous embodiment, controller 56, which in the illustrated embodiment includes microprocessor 65 and memory 67, along with a sub-synchronization injection routine 80, may be used to assist in the generation of sub-synchronization signals, and their incorporation into the final transmitted signals. In addition, digital signal transmitter 50 may also include a root raised cosine filter for filtering the signal from QPSK modulator 53 before it is processed by digital-to-analog converter 52, and upmixer circuitry between digital-to-analog converter 52 and antenna 51.

As shown in timing diagram 62 of Fig. 4A, the output signals of the transmitter include sub-synchronization data signals R injected into the main signal via channel encoder 55 and MUX 54. In this embodiment, the sub-synchronization data has taken the place of source data that would have been transmitted in the audio, video, or data channel (sometimes referred to as Prime Rate Channels or PRCs). The resulting transmitted signal is received by satellite receiver 40 and processed in the same manner as discussed in the previous embodiment. In other words, the sub-synchronization correlator 48 shown in Fig. 3 extracts sub-synchronization data from the demodulated sub-synchronization signals R, and uses that data to correct for phase and polarity errors in the received data. This enables channel decoders 46 and source decoders 47 to accurately process the received data. The data can then be played back on the vehicle or other audio system. As noted in the previous embodiment and shown in Fig. 4A, the output signal of transmitter 50 includes a standard frame synchronization pre-amble (FSP) with a period 66. The period 68 of the sub-synchronization signals R injected into the signal stream by transmitter 50 will be less than the period 66 of the standard FSP signal.

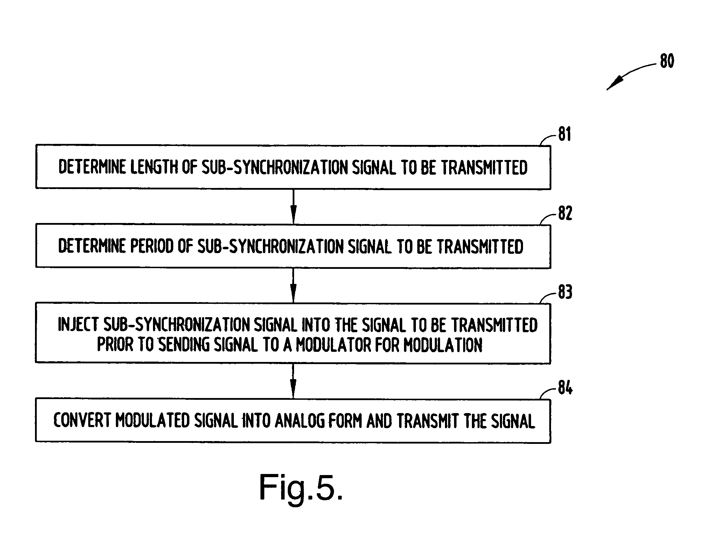

Referring to Fig. 5, sub-synchronization injection routine 80 is shown for injecting sub-synchronization signals into a transmitted data stream transmitted by the digital satellite transmitter. Routine 80 begins at step 81 and calls for the determination of the length of the sub-synchronization bits to be transmitted. In step 82, the period of the sub-synchronization signal to be transmitted is determined. According to the teachings of the present invention, the period of the sub-synchronization signal is less than the period of the existing pre-amble signal of the transmitter. In step 83, the sub-synchronization signal is injected into the MUX 54 prior to sending the signal to the modulator 53 for modulation. In step 84, the modulated signal containing the sub-synchronization data is converted to analog form and transmitted.

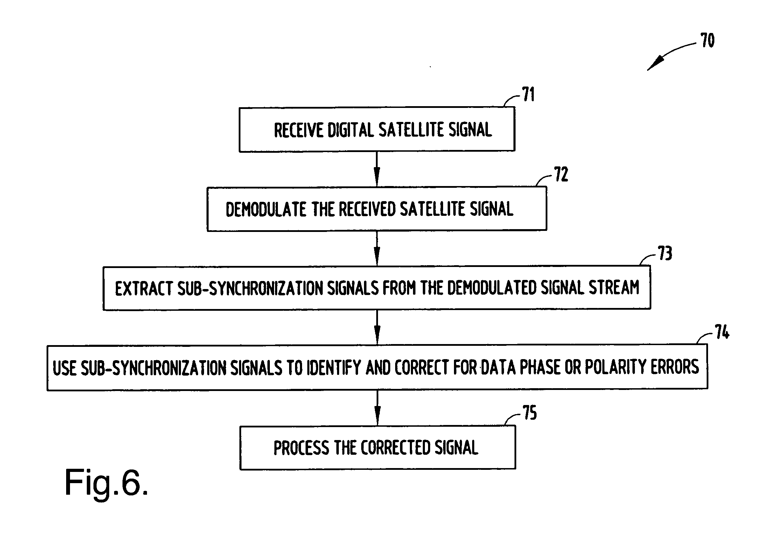

Referring to Fig. 6, the sub-synchronization recovery routine 70 is shown for extracting and using the sub-synchronization signals. Routine 70 begins at step 71 and calls for receiving the transmitted signal in receiver 40. Routine 70 then proceeds to step 72, where the signal is demodulated. In step 73, the sub-synchronization signals, having a period of less than the existing pre-amble signal, are extracted from the received data stream by the sub-synchronization correlator 48. In step 74, the receiver uses the extracted sub-synchronization signals to correct for phase or polarity errors in the received data stream. In step 75, the now correlated signal is further processed by the data decoder circuitry to extract the data.

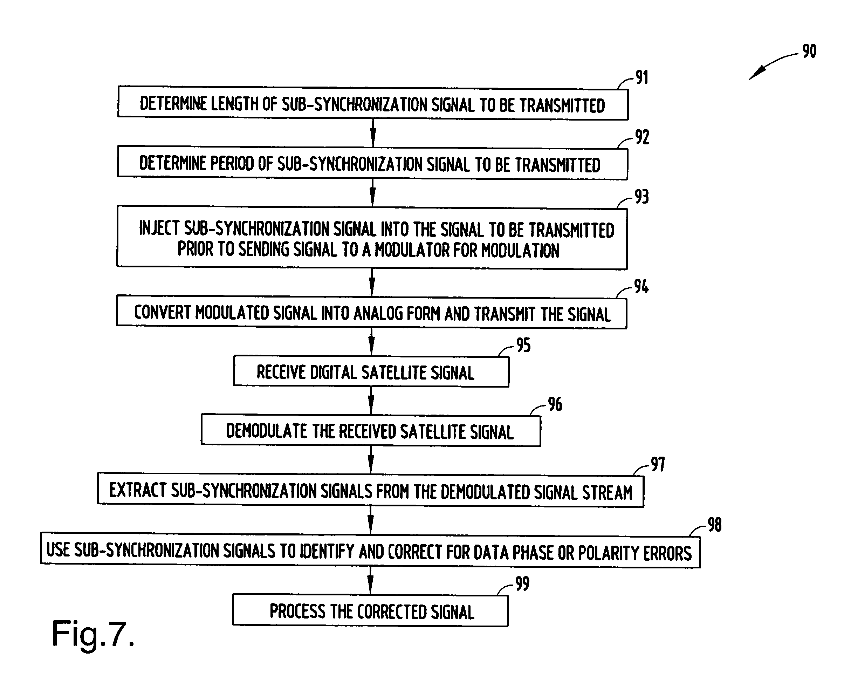

Referring to Fig. 7, routine 90 is shown for the overall process of injecting sub-synchronization signals into a transmitted digital satellite stream and extracting and using the sub-synchronization signals to accurately decode the transmitted data. Routine 90 begins at step 91 and calls for determination of a desired sub-synchronization signal length to be transmitted. In step 92, the desired sub-synchronization period is determined. According to the teachings of the present invention, the period of the sub-synchronization signal is less than the period of the existing pre-amble signal of the transmitter. In step 93, the transmitter injects the sub-synchronization signal into a transmitted signal stream prior to modulation and prior to transmission. In step 94, a signal containing the sub-synchronization signal is transmitted by the transmitter to a satellite transmission network. In step 95, a signal containing the sub-synchronization signal is received by a digital satellite receiver. In step 96, the received signal is demodulated. In step 97, sub-synchronization signals are extracted from the received signals by a sub-synchronization correlator. In step 98, the receiver uses the extracted sub-synchronization signals to correct for phase and polarity errors in the received signal. In step 99, the corrected signal is processed and the transmitted data is extracted.

It should be appreciated that the satellite receiver shown and the satellite transmitter of the present invention will allow satellite transmission and receiver systems using multiple antennas to quickly switch from one antenna source to another using the sub-synchronization signals taught by the present invention. By providing and decoding sub-synchronization signals, the present invention advantageously provides the ability to rapidly switch from among several antennas without severely negatively impacting the quality of the audio or other data received.

The above description is considered that of the preferred embodiments only. Modifications of the invention will occur to those skilled in the art and to those who make or use the invention. Therefore, it is understood that the embodiments shown in the drawings and described above are merely for illustrative purposes and not intended to limit the scope of the invention, which is defined by the following claims as interpreted according to the principles of patent law, including the doctrine of equivalents.

## Claims

1. A method for communicating sub-synchronization information in a communication system, comprising the steps of:
generating a data stream comprising pre-amble information (FSPs) having a first period (63);
introducing (83) sub-synchronization information (S) into the data stream at a second period (64) less than that of the first period (63) of the pre-amble information (FSPs);
transmitting (84) a signal comprising the data stream containing the sub-synchronization information (S) to one or more receivers (40);
receiving (71) via the one or more receivers (40) the transmitted data stream containing the sub-synchronization information (S);
extracting (73) the sub-synchronization information (S) from the transmitted signal; and
decoding (74) the transmitted signal data using the extracted sub-synchronization information (S).

2. The method of claim 1, wherein the sub-synchronization information (S) is introduced into the data stream by a transmitter (50) by providing known sub-synchronization data to a modulator (53) in the transmitter (50).

3. The method of claim 1, wherein the sub-synchronization information (S) is introduced into the data stream by a transmitter (50) by providing known sub-synchronization data to a multiplexer (54) connected to a modulator (53) in the transmitter (50).

4. The method of claim 1, wherein the sub-synchronization information (S) is introduced into the data stream by a transmitter (50) by providing known sub-synchronization data to a channel encoder (55) connected to a multiplexer (54) in the transmitter (50).

5. The method of claim 1, wherein the sub-synchronization information (S) is used by a receiver (40) to detect at least one of the phase and polarity of the transmitted signal.

6. The method of claim 1, wherein the sub-synchronization information (S) occurs with a period of between 250 microseconds and 500 microseconds.

7. The method of claim 1, wherein the data content of the sub-synchronization information (S) transmitted at a predetermined point in the data stream is known in advance by the receiver (40).

8. The method of claim 1, wherein the sub-synchronization information (S) introduced into the data stream takes the place of usable transmitted bits.

9. The method of claim 8, wherein the sub-synchronization information introduced into the data stream is introduced into an audio, video or data channel of an SDAR system.

10. The method of claim 1, wherein the sub-synchronization information (S) is used to enable faster antenna switching times in a receiver system with multiple antennas (30).

11. The method of claim 1, wherein at least one receiver (40) supports SDAR communication.

12. A system for transmitting and receiving communication signals containing sub-synchronization information (S) having a period less than that of existing pre-amble information (FSPs), comprising:
at least one communication signal transmitter (50) transmitting a signal comprising a data stream having pre-amble information (FSPs) at a first period (63), said transmitter (50) including a modulator (53), said transmitter (50) generating sub-synchronization information (S) having a second period (64) less than that of the first period (63) of the pre-amble information (FSPs), providing the sub-synchronization information (S) to the transmitter modulator (53), and incorporating the sub-synchronization information (S) into a composite signal transmitted by the transmitter (50); and
at least one communication signal receiver (40) for receiving the transmitted signal, said receiver (40) comprising a sub-synchronization correlator (48) for extracting the sub-synchronization information (S) from the composite signal received from the transmitter (50), said receiver (40) further decoding the transmitted signal using the extracted sub-synchronization information (S).

13. The system of claim 12, wherein at least one communication signal receiver (40) supports SDAR communication.

14. The system of claim 12, wherein said communication signal transmitter (50) includes at least one sub-synchronization controller (58), said sub-synchronization controller (58) providing signals to assist in the introduction of sub-synchronization information (S) into the data stream.

15. The system of claim 12, wherein said communication signal transmitter (50) includes a sub-synchronization data source (59) coupled to a channel encoder (55) to assist in the introduction of the sub-synchronization information (S) into the data stream.

16. The system of claim 12, wherein said communication signal receiver (40) uses the received sub-synchronization information (S) to detect at least one of the phase and polarity of the received signal.

17. The system of claim 12, wherein said communication signal receiver (40) knows in advance the data content of the sub-synchronization information (S) transmitted by the transmitter (50).

18. The system of claim 12, wherein the sub-synchronization information (S) introduced into the data stream by the communication signal transmitter (50) takes the place of usable transmitted bits.

19. The system of claim 12, wherein the sub-synchronization information introduced into the data stream by the communication signal transmitter (50) is introduced into an audio, video or data channel of an SDAR system.

20. The system of claim 12, wherein at least one receiver (40) is connected to more than one antenna (30), and the sub-synchronization information (S) introduced into the data stream by the communication signal transmitter (50) is used to enable faster antenna switching times among the multiple antennas (30).

21. The system of claim 12, wherein the sub-synchronization information (S) is created by a software routine (80) present in the transmitter hardware, and is incorporated into the composite signal by a software routine (80) present in the transmitter hardware.

22. The system of claim 12, wherein the sub-synchronization information (S) is extracted from the composite signal by a software (70) routine present in the receiver hardware.

23. The system of claim 12, wherein said communication signal transmitter (50) introduces sub-synchronization information (S) having a period less than 2 milliseconds into the transmitted data stream.

24. A communication signal receiver (40) capable of receiving communication signals containing sub-synchronization information, comprising:
at least one sub-synchronization correlator (48) for extracting sub-synchronization information (S) from a signal received from a transmitter (50), wherein said received signal contains a pre-amble signal (FSP) having a first period (63), and wherein said sub-synchronization information (S) has a second period (64) less than that of the first period (63) of the pre-amble signal (FSP), said receiver (40) further decoding the transmitted signal using the extracted sub-synchronization information (S).

25. The receiver of claim 24, wherein the communication signal receiver (40) supports SDAR communication.

26. The receiver (40) of claim 24, wherein the receiver (40) is capable of receiving and extracting sub-synchronization information (S) from signals sent by a communication signal transmitter (50) that includes at least one sub-synchronization controller (58) capable of providing signals to assist in the introduction of sub-synchronization information (S) into the transmitted data stream.

27. The system of claim 24, wherein the receiver (40) is capable of receiving and extracting sub-synchronization information (S) from signals sent by a communication signal transmitter (50) that includes at least one sub-synchronization data source (59) coupled to a channel encoder (55) and capable of assisting in the introduction of sub-synchronization information (S) into the data stream.

28. The receiver (40) of claim 24, wherein said communication signal receiver (40) uses the received sub-synchronization information (S) to detect at least one of the phase and polarity of the received signal.

29. The receiver (40) of claim 24, wherein said communication signal receiver (40) uses the received sub-synchronization information (S) to accurately decode the data in the received signal.

30. The system of claim 24, wherein said communication signal receiver (40) knows in advance the data content of sub-synchronization information (S) transmitted by a transmitter (50).

31. The system of claim 24, wherein the receiver (40) is capable of receiving and decoding sub-synchronization information (S) introduced into the data stream by the communication signal transmitter (50) and taking the place of usable transmitted bits.

32. The system of claim 24, wherein the receiver (40) is capable of receiving and decoding sub-synchronization information (S) that has been introduced into an audio, video or data channel of an SDAR data stream by the communication signal transmitter (50).

33. The system of claim 24, wherein the receiver (40) is connected to more than one antenna (30), and the receiver (40) uses sub-synchronization information (S) introduced into the data stream by the communication signal transmitter (50) to enable faster antenna switching times among the multiple antennas (30).

34. The system of claim 24, wherein the receiver (40) extracts the sub-synchronization information (S) from the composite signal by means of a software routine (70) present in the receiver hardware.

35. The receiver (40) of claim 24, wherein the period of the sub-synchronization information (S) is less than 2 milliseconds.
